# EUROPÄISCHE PATENTSCHRIFT

(11) **EP 2 039 576 B1**
(45) Veröffentlichungstag und Bekanntmachung des Hinweises auf die Patenterteilung: **31.10.2018**
(21) Anmeldenummer: 08012102.3
(22) Anmeldetag: 04.07.2008
(51) Int. Cl.: B60T 15/50, B60T 17/06

(54) **System mit einer Luftaufbereitungsanlage**
System with an air conditioning assembly
Système doté d'une installation de préparation de l'air

(30) Priorität: 16.07.2007 DE 102007032963
(43) Veröffentlichungstag der Anmeldung: 25.03.2009
(73) Patentinhaber: KNORR-BREMSE Systeme für Nutzfahrzeuge GmbH, 80809 München (DE)
(72) Erfinder: Schnittger, Karsten, 80935 München (DE)
(74) Vertreter: Mattusch, Gundula

(56) Entgegenhaltungen:
- EP-A1- 0 463 329
- EP-A1- 1 396 406
- EP-A1- 1 757 506
- WO-A1-99/43527
- WO-A1-03/095279
- DE-A1- 10 357 763
- DE-B3-102005 057 004
- GB-A- 2 335 760

## Beschreibung

Die Erfindung betrifft ein System mit einer Luftaufbereitungsanlage, insbesondere der eines Nutzfahrzeugs.

Weiterhin betrifft die Erfindung ein Verfahren zur Steuerung einer Luftaufbereitungsanlage eines Fahrzeugs, insbesondere der eines Nutzfahrzeugs.

Derartige Systeme/Verfahren sind beispielsweise aus den Entgegenhaltungen GB 2 335 760 A, WO 99/43527 oder EP 1 396 406 A1 bekannt.

Allgemein werden in Nutzfahrzeugen Systeme mit Luftaufbereitungsanlagen eingesetzt, insbesondere elektronische Luftaufbereitungsanlagen, die die Versorgung von Druckluftverbraucherkreisen mit Druckluft über Steuereinrichtungen steuern. Derartige Druckluftverbraucherkreise sind beispielsweise Bremskreise eines Nutzfahrzeugsbremssystems, ein Nebenverbraucherkreis, ein Anhängerversorgungskreis, ein Feststellbremsanlagenkreis, ein Luftfederungskreis etc. Daher ist die Druckluftversorgung beziehungsweise die Luftaufbereitung eine zentrale Komponente im Nutzfahrzeugbremssystem. Insbesondere für das Nutzfahrzeugbremssystem steuert die Luftaufbereitungsanlage die Aufnahme von Bremsenergie in der Form von komprimierter Luft. Damit ist sie ein Zwischenstück beziehungsweise Bindeglied zwischen einem zur Druckluftbeschaffung beziehungsweise Druckluftversorgung vorgesehenen Kompressor, der öl- und wasserhaltige Luft fördert, und den Druckluftverbraucherkreisen im Nutzfahrzeug.

Elektronisch gesteuerte Luftaufbereitungsanlagen sind bereits im Stand der Technik bekannt. Eine derartige Luftaufbereitungsanlage steuert beispielsweise mittels einer ihr zugeordneten elektronischen Steuereinrichtung die Aufnahme von Druckluft, deren Filterung und Trocknung, sowie die Verteilung der so gereinigten Druckluft auf die verschiedenen Druckluftverbraucherkreise. Dies erfolgt im Allgemeinen in Verbindung mit bestimmten Kompressoren unterschiedlicher Bauart und weiterhin unter Verwendung von Fahrzeuginformationen aus anderen im Nutzfahrzeug vorgesehenen Steuergeräten. Jedoch führt die Luftaufbereitung durch die Luftaufbereitungsanlage zu einem hohen Energie- beziehungsweise Kraftstoffverbrauch. Dies rührt daher, dass für die Druckluftbeschaffung beziehungsweise die Bereitstellung der Druckluft der Kompressor beispielsweise über eine kraftschlüssige Verbindung durch einen Verbrennungsmotor des Nutzfahrzeugs angetrieben werden muss. Im Stand der Technik wurden bereits Maßnahmen zur Reduzierung des Kraftstoffverbrauchs ergriffen, wobei mehrere und teilweise auch unterschiedliche Ansätzen verfolgt werden.

Ein Ansatz ist beispielsweise eine Umschaltung eines Kompressorwiderstands auf einen Leerlaufbetrieb, bei dem lediglich die für den Leerlauf erforderliche Antriebsleistung für den Verbrennungsmotor anfällt. Diese Umschaltung erfolgt üblicherweise bei Fahrtzuständen des Nutzfahrzeugs, bei denen beispielsweise das Bremssystem mit Druckluft gefüllt ist und keine weitere Druckluftförderung notwendig ist. Daher verfügen die für die Umschaltung tauglichen Kompressoren über eine pneumatische Steuerleitung, die so genannte ESS-Leitung. Über die Steuerleitung werden diese Kompressoren durch die Luftaufbereitungsanlage angesteuert, wodurch die Förderung der Druckluft gegen die in den Druckluftverbraucherkreisen vorliegenden Druckluftniveaus unterbrochen wird. Der Kompressor pumpt in diesem Leerlaufbetrieb beispielsweise die Luft im Kreis und/oder tauscht sie mit der Umgebung aus. Ein weiterer Ansatz besteht darin, die kraftschlüssige Verbindung zwischen dem Verbrennungsmotor und dem Kompressor während des Leerlaufbetriebs vollständig zu unterbrechen, wenn eine Luftaufbereitung nicht erforderlich ist. Dies kann beispielsweise durch eine Kompressorkupplung beziehungsweise eine zwischen dem Kompressor und Verbrennungsmotor vorgesehene Kupplung umgesetzt werden. Im Vergleich zum vorgenannten Ansatz wird in diesem Fall die Leerlauflast während des Leerlaufbetriebs des Kompressors gänzlich dem Verbrennungsmotor abgenommen. Weiterhin ist im Stand der Technik ein Ansatz bekannt, eine Synchronisierung eines Luftaufbereitungsbetriebs beziehungsweise die Druckluftbeschaffung mit Schubbetrieben beziehungsweise Schubphasen des Verbrennungsmotors vorzunehmen, d.h. den Kompressor in den Schubbetrieben des Verbrennungsmotors anzutreiben. In diesem Zusammenhang werden unter Schubbetrieben des Nutzfahrzeugs die Betriebsphasen verstanden, in denen der Motor bei kraftschlüssig verbundenem Antriebsstrang durch die kinetische Energie des Fahrzeugs ohne Kraftstoffverbrauch geschleppt wird, beispielsweise in einem Motorbremsbetrieb. Insbesondere wird der Schubbetrieb des Nutzfahrzeugs bei den dem Stand der Technik angehörenden Luftaufbereitungsanlagen dadurch ermittelt, dass verschiedene, durch einen in dem Nutzfahrzeug üblicherweise verwendeten CAN-Bus zur Verfügung gestellte Informationen, wie beispielsweise ein negatives Motordrehmoment bei gleichzeitig eingelegtem Gang und nicht getrennter beziehungsweise kraftübertragender Kupplung, verwendet werden. Dabei wird bei derartigen elektronischen Luftaufbereitungsanlagen bei einer bestimmten Dauer dieses Zustands von mehreren Sekunden auf eine Gefällestrecke und damit einen längeren Erhalt des Schubbetriebs geschlossen. Somit wird der Schubbetrieb dazu verwendet, die Druckluftbeschaffung durchzuführen und damit eine Erhöhung des Druckluftniveaus in beispielsweise der Bremsanlage ohne Kraftstoffverbrauch (Overrun-Mode) zu bewirken. Bei einer Umschaltung des Kompressors von der Druckluftbeschaffung auf den Leerlaufbetrieb kann jedoch, abhängig von der Ausführung der Luftaufbereitu8ngsalage, ein nicht zu vernachlässigendes Druckluftvolumen, beispielsweise aus Leitungen etc., verloren geht. Insbesondere wird dieses Druckluftvolumen bei der Umschaltung in die Umgebung abgeblasen. Daher sollte die Umschaltung nur dann erfolgen, wenn ein Schubbetrieb voraussichtlich länger anhält. Dies wird jedoch bei der Durchführung des Luftaufbereitungsbetriebs gemäß dem Stand der Technik nicht berücksichtig; es wird lediglich das Vorliegen des Schubbetriebs ermittelt. Dadurch wird bei unter Umständen nur sehr kurzen Schubphasen des Verbrennungsmotors auf die verbrauchsfreie Luftförderung beziehungsweise Luftaufbereitung umgeschaltet. Dabei kann insbesondere beim anschließenden Umschalten beispielsweise zum Leerlaufbetrieb des Kompressors eine Druckluftmenge ausgestoßen werden, die gleich oder sogar größere als die zuvor geförderte Druckluftmenge ist. Somit geht anstelle einer ursprünglich beabsichtigten Energieeinsparung Energie verloren. Ursache hierfür ist bei der derzeitigen Ermittlung des Schubbetriebs eine fehlende Sicherheit über den Fortbestand des Schubbetriebs. Zudem wirkt sich ein häufiger Wechsel zwischen den beiden Betrieben der Druckluftförderung und des Leerlaufs nachteilig auf die erreichbare Lebensdauer von entsprechenden schaltenden Komponenten aus. Aus den vorstehend genannten Gründen kann somit unter Umständen der Fall auftreten, dass der Kraftstoffverbrauch sogar erhöht wird. Seitens der Autohersteller besteht jedoch zunehmend die Kundenforderung nach Verbesserung der Funktionalität bei allen Energie und damit Kraftstoff verbrauchenden Komponenten.

Ein weiterer Nachteil besteht darin, dass bei der Synchronisierung des Schubbetriebs mit dem Luftaufbereitungsbetrieb lediglich recht wenig Energie beziehungsweise Druckluft gewonnen werden kann. Grund hierfür ist, dass das Druckluftniveau beispielsweise aufgrund der Auslegung des Systems mit der Luftaufbereitungsanlage nur recht wenig über das Betriebsdruckniveau der Bremsanlage angehoben wird und als Energiespeicher nur die vorhandenen Volumina, beispielsweise Leitungsvolumina, im Bremssystem genutzt werden.

Es ist daher die Aufgabe der Erfindung, die gattungsgemäßen Systeme mit Luftaufbereitungsanlagen und die gattungsgemäßen Verfahren zur Steuerung von Luftaufbereitungsanlagen derart weiterzubilden, dass der Kraftstoffverbrauch eines Fahrzeugs weiter reduziert wird.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Das erfindungsgemäße System baut auf dem gattungsgemäßen Stand der Technik dadurch auf, dass stromaufwärts von zumindest einem zu einem Druckluftverbraucher führenden Druckluftanschluss der Luftaufbereitungsanlage ein Druckluftspeicher vorgesehen ist der einer Lufttrocknereinheit der Luftaufbereitungsanlage vorgeschaltet ist. Der Energiespeicher beziehungsweise Druckluftspeicher kann beispielsweise durch ein Volumen ausgebildet werden, das als Leitung oder als Behälter ausgeführt ist. Durch die Verwendung des zusätzlichen Energiespeichers beziehungsweise Druckluftspeichers kann die Druckluftaufnahme deutlich erhöht werden. Insbesondere im Zusammenhang mit der Synchronisierung des Schubbetriebs mit dem Luftaufbereitungsbetrieb kann durch diese Weiterbildung mehr Druckluft aufgenommen werden. Während der Zeit beziehungsweise der Phasen, bei denen das Bremssystem aus dem Energiespeicher versorgt werden kann, wird der Kompressor abgeschaltet, um Kraftstoff zu sparen. Dadurch kann das Bremssystem nach der Synchronisierung des Schubbetriebs mit dem Luftaufbereitungsbetrieb des Nutzfahrzeugs dann für längere Zeit aus dem Druckluftspeicher versorgt werden. Der Kompressor wird daher abgeschaltet, um Kraftstoff zu sparen. Somit kann insgesamt die Anzahl der Antriebsphasen des Kompressors verringert werden. Erst wenn der Druckluftspeicherdruck auf beispielsweise das Betriebsdruckniveau des Bremssystems wieder abgefallen ist und keine Schubbetriebsphase zum Füllen genutzt werden kann, wird mit dem vom Verbrennungsmotor des Nutzfahrzeugs angetriebenen Kompressor Druckluft nachgefördert.

Das erfindungsgemäße System kann in vorteilhafter Weise derart weitergebildet sein, dass dem Druckluftspeicher ein der Luftaufbereitungsanlage zugeordnetes Druckbegrenzungsventil nachgeschaltet ist. Der vorgeschaltete Druckluftspeicher kann somit mit einem höheren Druck als der Betriebsdruck des Bremssystems betrieben werden. Mit dem dem Druckluftspeicher nachgeschalteten Druckbegrenzungsventil soll der Druck der Druckluft bei Druckluftförderung des Druckluftspeichers auf das übliche Druckniveau reduziert werden, so dass Komponenten des Bremssystems normal betrieben werden können.

Bei der Anordnung des Druckluftspeichers vor der Lufttrocknereinheit, insbesondere der Lufttrockner- und Luftfiltereinheit, wird das erfindungsgemäße System so ausgebildet, dass dem Druckbegrenzungsventil ein Sperrventil unmittelbar vor- oder nachgeschaltet ist. Dadurch kann beim Abstellen des Fahrzeugs der Druck in dem Druckluftspeicher gesichert werden. Somit muss der Druckluftspeicher bei einem erneuten Starten beziehungsweise Anlassen des Fahrzeuges nicht neu befüllt werden.

Darüber hinaus kann vorgesehen sein, das erfindungsgemäße System so zu verwirklichen, dass der Druckluftspeicher der Luftaufbereitungsanlage vorgeschaltet ist.

Weiterhin ist es besonders vorteilhaft, wenn das erfindungsgemäße System derart ausgeführt ist, dass ein der Luftaufbereitungsanlage zugeordnetes Sicherheitsventil dem Druckluftspeicher vor- oder nachgeschaltet und dem Druckluftbegrenzungsventil sowie dem Sperrventil vorgeschaltet ist. Dadurch wird ein unangemessen hoher Druck durch das Sicherheitsventil aus dem Druckluftspeicher abgelassen, wodurch der Druckluftspeicher gegen eine Drucküberschreitung abgesichert ist.

Bevorzugt wird das erfindungsgemäße System so verwirklicht, dass das Sicherheitsventil ein federvorgespanntes Rückschlagventil umfasst, das in Richtung zum Druckluftspeicher vorgespannt wird und schließt, und das in umgekehrter Richtung unter Überwindung der Vorspannung öffnet.

Darüber hinaus kann das erfindungsgemäße System derart realisiert werden, dass der Druckluftspeicher mit einer Hauptleitung gekoppelt ist, die über die Luftaufbereitungsanlage zu einem oder mehreren Druckluftverbrauchern führt.

Vorzugsweise wird das erfindungsgemäße System so ausgebildet, dass dem Druckluftspeicher eine Druckmittelquelle, insbesondere ein Kompressor, vorgeschaltet ist.

Weiterhin kann das erfindungsgemäße System so weitergebildet sein, dass ein der Luftaufbereitungsanlage zugeordneter Drucksensor vorgesehen ist, der den Druck in dem Druckluftspeicher erfasst. Dabei kann der Drucksensor insbesondere zur Drucküberwachung des Druckluftspeichers dienen, um Rückschlüsse über den Füllstand des Druckluftspeichers zu erhalten.

In einer bevorzugten Ausführung wird das erfindungsgemäße System so verwirklicht, dass der Druckluftspeicher dazu geeignet ist, in einem Schubbetrieb des Nutzfahrzeugs auf ein Druckniveau aufgefüllt zu werden, das über einem Arbeitsdruck eines Bremssystems liegt. Der Druckluftspeicher ist somit dazu imstande, im Schubbetrieb auf ein definiertes Druckniveau aufgefüllt zu werden, welches über dem Arbeitsdruck des Bremssystems liegt. Wenn der Behälterdruck auf das Betriebsdruckniveau des Bremssystems abgefallen ist, bei dem das Nachfüllen gestartet werden muss, und keine Schubbetriebphase zum Füllen genutzt werden kann, dann wird mit dem vom Motor angetriebenen Kompressor nachgefördert.

Darüber hinaus kann das erfindungsgemäße System auch dergestalt sein, dass die Luftaufbereitungsanlage und der Druckluftspeicher in einem gemeinsamen Gehäuse untergebracht sind. Ebenso ist aber auch denkbar, die Luftaufbereitungsanlage und den Druckluftspeicher in separaten Gehäusen unterzubringen. Weiterhin können das Sperrventil, das Druckbegrenzungsventil, das Sicherheitsventil, Drucksensor und der Druckluftspeicher separat verbaut oder vorzugsweise in das Gehäuse der Luftaufbereitungsanlage beziehungsweise -einheit verbaut werden.

Das erfindungsgemäße Verfahren baut auf dem gattungsgemäßen Stand der Technik dadurch auf, dass stromaufwärts von zumindest einem zu einem Druckluftverbraucher führenden Druckluftanschluss der Luftaufbereitungsanlage ein Druckluftspeicher vorgesehen ist, der auf ein Druckluftniveau aufgefüllt wird, das über einem Arbeitsdruck eines Bremssystems liegt, wobei der Druckluftspeicher einer Lufttrockner der Luftaufbereitungsanlage vorgeschaltet ist. Dadurch ergeben sich die im Zusammenhang mit dem erfindungsgemäßen System erläuterten Eigenschaften und Vorteile in gleicher oder ähnlicher Weise, weshalb zur Vermeidung von Wiederholungen auf die entsprechenden Ausführungen im Zusammenhang mit dem erfindungsgemäßen System verwiesen wird. Gleiches gilt sinngemäß für die folgenden bevorzugten Ausführungsformen des erfindungsgemäßen Verfahrens, wobei zur Vermeidung von Wiederholungen auch diesbezüglich auf die entsprechenden Ausführungen im Zusammenhang mit dem erfindungsgemäßen System verwiesen wird.

Das erfindungsgemäße Verfahren kann in vorteilhafterweise so ausgeführt werden, dass der Druckluftspeicher bei einem Schubbetrieb des Fahrzeugs aufgefüllt wird.

Weiterhin kann das erfindungsgemäße Verfahren derart weitergebildet werden, dass ein Kompressor angetrieben wird, um Druckluft zu dem Bremssystem nachzufördern, wenn das Druckluftniveau in dem Druckluftspeicher auf oder unter den Arbeitsdruck des Bremssystems gefallen ist.

Darüber hinaus kann das erfindungsgemäße Verfahren auch so verwirklicht werden, dass ein dem Druckluftspeicher nachgeschaltetes Sperrventil in eine Schließstellung gebracht wird, wenn das Fahrzeug abgestellt wird.

Die Erfindung wirkt besonders vorteilhaft, wenn die Schubphasen, in denen der Behälter ohne Einsatz von Kraftstoff nachgefüllt werden kann, möglichst vollständig ausgenutzt werden. Die Kenntnis der Topologie der Fahrtstrecke durch GPS-Informationen kann zur möglichst vollständigen Ausnutzung der Schubphasen beitragen.

Bevorzugte Ausführungsbeispiele der Erfindung werden nachstehend anhand der Figuren beispielhaft erläutert.

Es zeigen:
- Figur 1: eine schematische Darstellung einer Luftaufbereitungsanlage eines Fahrzeugs, die zur Durchführung der Verfahren nach den Figuren 2 und 3 geeignet ist;
- Figur 2: ein Flussdiagramm eines Verfahrens zur Steuerung einer Luftaufbereitungsanlage;
- Figur 3: ein Flussdiagramm eines weiteren Verfahrens zur Steuerung einer Luftaufbereitungsanlage;
- Figur 4: ein erfindungsgemäßes System mit einer ausführlicheren Darstellung der Luftaufbereitungsanlage gemäß einem ersten Ausführungsbeispiel der Erfindung;
- Figur 5: das erfindungsgemäße System gemäß einem zweiten Ausführungsbeispiel der Erfindung;
- Figur 6: das erfindungsgemäße System gemäß einem dritten Ausführungsbeispiel der Erfindung;
- Figur 7: das erfindungsgemäße System gemäß einem vierten Ausführungsbeispiel der Erfindung;
- Figur 8: das erfindungsgemäße System gemäß einem fünften Ausführungsbeispiel der Erfindung;
- Figur 9: das erfindungsgemäße System gemäß einem sechsten Ausführungsbeispiel der Erfindung;
- Figur 10: das erfindungsgemäße System gemäß einem siebten Ausführungsbeispiel der Erfindung; und
- Figur 11: das erfindungsgemäße System gemäß einem achten Ausführungsbeispiel der Erfindung;

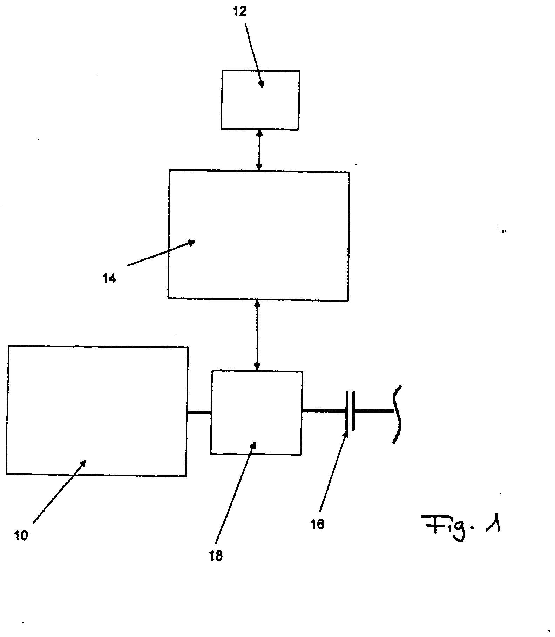

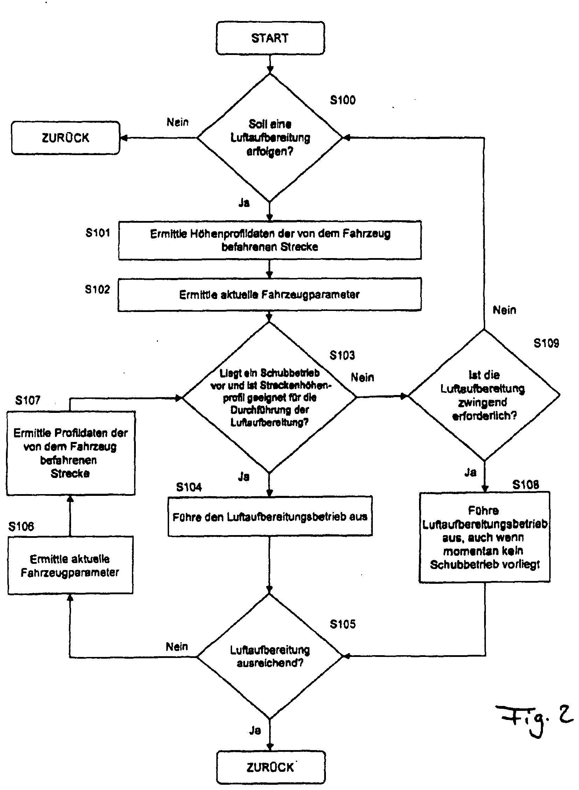

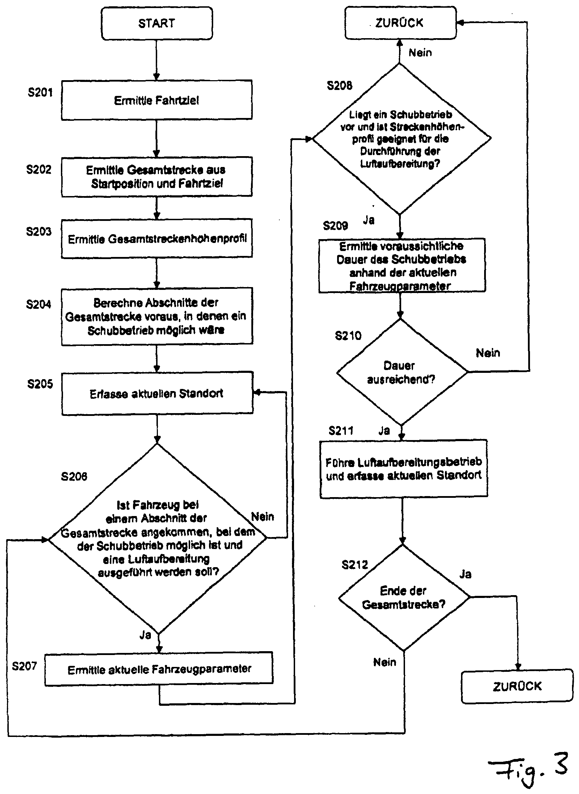

Figur 1 zeigt eine schematische Darstellung einer Luftaufbereitungsanlage 10 eines Fahrzeugs, insbesondere der eines Nutzfahrzeugs, die zur Durchführung der Verfahren der Figuren 2 und 3 geeignet ist. Bevor die Verfahren anhand der Figuren 2 und 3 erläutert werden, wird zunächst näher auf den Aufbau der Luftaufbereitungsanlage 10 eingegangen. In dem dargestellten Fall ist die Luftaufbereitungsanlage 10 mit einem nicht näher interessierenden Kompressor 18 beispielsweise pneumatisch gekoppelt, der zur Luftaufbereitung betreibbar ist. Der Kompressor 18 wird über einen nur teilweise dargestellten Antriebsstrang 16 angetrieben, wobei eine Momentenübertragung zu dem Kompressor 18 über den Antriebsstrang 16 beispielsweise durch eine Kupplung unterbrochen werden kann. Vorzugsweise stammt der Antriebsstrang 16 von einem nicht gezeigten und nicht näher interessierenden Verbrennungsmotor. Der Antriebsstrang 16 kann insbesondere als ein für den Kompressor 18 separater Antriebstrang vorgesehen oder von einem mit einem Getriebe gekoppelten Hauptantriebsstrang des Verbrennungsmotors abgezweigt sein. Der Kompressor 18 wird zur Variation des Luftaufbereitungsbetriebs von einer Steuereinrichtung 14 beziehungsweise einem Controller 14 angesteuert. Vorzugsweise dient die Steuereinrichtung 14 ebenso zur Unterbrechung der Momentenübertragung zu dem Kompressor 16 durch Ansteuerung der Kupplung. Die Steuereinrichtung 14 ist in diesem Fall eine dem Fachmann bekannte Steuereinrichtung, die sowohl Steuerungsals auch Regelungsfunktionen ausführen kann. Die Steuereinrichtung 14 bezieht im gezeigten Fall über eine zum Datenaustausch geeignete Verbindung Daten- beziehungsweise Informationen von einem Navigationssystem 12. Das Navigationssystem 12 ist in diesem Fall ein herkömmliches Navigationssystem 12, das dazu geeignet ist, neben mit Positionsangaben des Fahrzeugs korrelierende Daten auch mit Höhenangaben korrelierende Daten an die Steuereinrichtung 14 zu übermitteln. Insbesondere ist das Navigationssystem 12 dazu geeignet, der Steuereinrichtung 14 mit Streckenprofilen korrelierende Daten zu liefern, aus denen sich Gefälle und Steigungen der entsprechenden durch das Fahrzeug befahrenen Strecken berechnen lassen.

Figur 2 zeigt ein Flussdiagramm eines Verfahrens zur Steuerung der Luftaufbereitungsanlage 10 von Figur 1. Die folgenden Schritte werden gänzlich von der Steuereinrichtung 14 durchgeführt. Zu Beginn des Verfahrens erfolgt in Schritt S100 eine Abfrage, ob eine Luftaufbereitung beziehungsweise Druckluftförderung mittels eines Luftaufbereitungsbetriebs erfolgen soll. Die Abfrage von Schritt S100 ist beispielsweise an Bedingungen über die in einzelnen mit der Luftaufbereitungsanlage 10 gekoppelten Druckluftkreisen herrschenden Druckluftverhältnisse geknüpft. Unter anderem kann eine Bedingung der Druckluftzustand eines einem Druckluftkreis zugeordneten Druckluftbehälters sein. Die mit der Luftaufbereitungsanlage gekoppelten Druckluftkreise können insbesondere Bremskreise, Nebenverbraucherkreise, ein Anhängerversorgungskreis, ein Feststellbremskreis, ein Luftfederungskreis etc. sein. Wird festgestellt, dass keine Druckluftaufbereitung erfolgen soll, beispielsweise ist ein Druckluftniveau der entsprechenden Druckluftkreise ausreichend, so endet das Verfahren an dieser Stelle und beginnt wieder von vorne. Wird beurteilt, dass eine Druckluftaufbereitung erfolgen soll, beispielsweise ist das Druckluftniveau zumindest eines Druckluftspeichers unter einem vorbestimmten Grenzwert, so schreitet das Verfahren zu Schritt S101 voran. Bei Schritt S101 bezieht die Steuereinrichtung 14 Höhenprofildaten einer von dem Fahrzeug befahrenen Strecke. Da in dem Navigationssystem 12 kein Fahrtziel vorgegeben wurde, übermittelt das Navigationssystem 12 der Steuereinrichtung 14 aktuelle oder bis zu einem vorbestimmten Ausmaß vorausberechnete Höhenprofildaten der vor dem Fahrzeug liegenden Strecke. In diesem Fall umfassen die Höhenprofildaten der vom dem Fahrzeug befahrenen Strecke die Streckenprofildaten von der aktuellen Position des Fahrzeugs bis zu einer vorbestimmten Position. Vorzugsweise wird die vor dem Fahrzeug liegende Strecke durch die Länge der Straße vorgegeben, in der sich das Fahrzeug zum aktuellen Zeitpunkt befindet. Die vorbestimmte Position ist frei festlegbar und kann beliebig zwischen der aktuellen Position des Fahrzeugs und dem Ende der Straße vorbestimmt sein. Aus den Höhenprofildaten der von dem Fahrzeug befahrenen Strecke berechnet die Steuereinrichtung 14 dann Steigungen und Gefälle an der aktuellen Position des Fahrzeugs und/oder des Streckenverlaufs bis zur vorbestimmten Position. Als nächstes werden in Schritt S102 aktuelle Fahrzeugparameter ermittelt. Die aktuellen Fahrzeugparameter umfassen unter Anderem zumindest ein Element aus von dem Navigationssystem 12 bezogene Positions- und Höhendaten des Fahrzeugs, von einem Fahrerassistenzsystem bezogene Abstandsdaten zu einem bezüglich des Fahrzeugs vorausfahrenden weiteren Fahrzeug, eine Fahrzeuggeschwindigkeit, insbesondere Radgeschwindigkeiten und/oder Gierraten, eine Fahrzeugbeschleunigung, das aktuelle Druckluftniveau der Bremsanlage, ein Feuchtigkeitsniveau einer Druckluftpatrone der Bremsanlage, eine Motordrehzahl, ein Motormoment, Kupplungs- und/oder Gangdaten des Fahrzeugs und Retarderdaten des Fahrzeugs etc. Nach der Ermittlung der aktuellen Fahrzeugparameter in Schritt S102 schreitet das Verfahren zu Schritt S103 voran. In Schritt S103 erfolgt zum einen eine Abfrage, ob ein Schubbetrieb des Fahrzeugs vorliegt. Die Ermittlung des Schubbetriebs des Fahrzeugs erfolgt zumindest teilweise in Abhängigkeit von einem oder mehreren der aktuellen Fahrzeugparameter und kann zusätzlich auch in Abhängigkeit von den Höhenprofildaten der befahrenen Strecke erfolgen. Zum anderen wird abgefragt, ob die ermittelten Höhenprofildaten der Strecke dafür geeignet sind, einen Luftaufbereitungsbetrieb durchzuführen. Insbesondere bei Vorliegen eines Gefälles der Strecke wird beurteilt, dass die Durchführung des Luftaufbereitungsbetriebs vorgenommen werden kann. Werden die Höhenprofildaten von der aktuellen Position bis zu der vorbestimmten Position vorausberechnet, so kann die Beurteilung auch unter Berücksichtigung der vor dem Fahrzeug liegenden Strecke erfolgen, beispielsweise anhand der Länge des Gefälles. Ist die Länge des Gefälles groß genug, so wird die Durchführung des Luftaufbereitungsbetriebs besonders begünstigt. Wird in Schritt S103 bestimmt, dass ein Schubbetrieb des Fahrzeugs vorliegt und das Streckenhöhenprofil für die Durchführung des Luftaufbereitungsbetriebs geeignet ist, schreitet das Verfahren zu Schritt S104 voran, in dem der Luftaufbereitungsbetrieb ausgeführt wird. Insbesondere wird in diesem Fall der Kompressor 18 zur Druckluftförderung beziehungsweise Druckluftbeschaffung zu den entsprechenden Druckluftkreisen betrieben. Anschließend wird in Schritt S105 beurteilt, ob die Luftaufbereitung von Schritt S104 ausreichend war. Beispielsweise erfolgt diese Beurteilung anhand einer Überprüfung des Druckluftniveaus der Luftbehälter der entsprechenden Druckluftkreise. War die Luftaufbereitung ausreichend, so endet das Verfahren und beginnt wieder von vorne. Wird jedoch beurteilt, dass die Luftaufbereitung nicht ausreichend war, so werden in den Schritten S106 und S107 erneut die aktuellen Fahrzeugparameter und die Höhenprofildaten der befahrenen Strecke analog zu den Schritten S101 und S102 ermittelt. Dies rührt daher, dass sich inzwischen Änderungen der entsprechenden Daten ergeben haben könnten, da sich die Position des Fahrzeugs inzwischen geändert haben kann. Anschließend erfolgt wieder die vorgenannte Abfrage in Schritt S103. Wird in Schritt S103 entschieden, dass kein Schubbetrieb des Fahrzeugs vorliegt oder das Streckenhöhenprofil für die Durchführung des Luftaufbereitungsbetriebs ungeeignet ist, so schreitet das Verfahren zu Schritt S109 voran. Dort erfolgt eine weitere Abfrage, ob die Luftaufbereitung zwingend erforderlich ist. Dies kann beispielsweise dann der Fall sein, wenn zumindest ein Druckluftniveau eines Druckluftbehälters eines entsprechenden Druckluftkreises unter ein kritisches Niveau gesunken ist. Ist dies der Fall, so wird auch, wenn momentan kein Schubbetrieb des Fahrzeugs vorliegt oder aufgrund ungeeigneten Streckenhöhenprofils, der Luftaufbereitungsbetrieb ausgeführt. Anschließend erfolgt erneut die vorstehend erläuterte Abfrage des Schritts S105. Wird in Schritt S109 jedoch bestimmt, das eine Luftaufbereitung nicht zwingend erforderlich ist, beispielsweise ist das Druckluftniveau über dem kritischen Niveau, so kehrt das Verfahren zu dem vorstehend beschrieben Schritt S100 zurück.

Figur 3 zeigt ein Flussdiagramm eines Verfahrens zur Steuerung der Luftaufbereitungsanlage 10. Das Verfahren beginnt bei Schritt S201 mit der Ermittlung eines Fahrtziels, das in das Navigationssystem 12 eingegeben wurde und der Steuereinrichtung 14 übermittelt wird. Weiterhin bezieht die Steuereinrichtung 14 in Schritt S202 die von dem Fahrzeug befahrene und zurückzulegende Gesamtstrecke von dem Navigationssystem 12, die sich aus jeweils der aktuellen Startposition und dem Fahrtziel des Fahrzeugs ergibt. Ebenso übermittelt das Navigationssystem 12 bei Schritt S203 ein Gesamtstreckenhöhenprofil der zurückzulegenden Gesamtstrecke an die Steuereinrichtung 14. Daraus berechnet die Steuereinrichtung 14 anschließend in Schritt S204 Abschnitte der Gesamtstrecke voraus, in denen ein Schubbetrieb des Fahrzeugs auftreten könnte und die für die Durchführung eines Luftaufbereitungsbetriebs geeignet wären.

In Schritt S205 wird der aktuelle Standort des Fahrzeugs bezogen. Anschließend erfolgt in Schritt S206 eine Abfrage, ob das Fahrzeug bei einem berechneten Abschnitt, bei dem ein Schubbetrieb möglich wäre, angekommen ist, und ob eine Luftaufbereitung ausgeführt werden soll. Dabei hängt die Abfrage der Ausführung der Luftaufbereitung von den gleichen Kriterien ab, wie bei Schritt S100 von Figur 2. Wenn das Fahrzeug nicht bei dem vorausberechneten Abschnitt angekommen ist oder keine Luftaufbereitung ausgeführt werden soll, kehrt das Verfahren zu Schritt S205 solange zurück, bis beide in Schritt S206 abgefragten Bedingungen erfüllt sind. Es wird angemerkt, dass in diesem Fall auf eine Abfrage gemäß den Schritten S109 und S108 der Einfachheit halber verzichtet wurde. Jedoch wird in jedem Fall ein Luftaufbereitungsbetrieb ausgeführt, falls dies zwingend erforderlich ist, wie vorstehend im Zusammenhang mit den Schritten S109 und S108 beschrieben ist. Sind die Bedingungen der Abfrage von Schritt S206 erfüllt, so schreitet das Verfahren zu Schritt S207 voran, in dem die aktuellen Fahrzeugparameter analog zu Schritt S102 von Figur 2 ermittelt werden. Anschließend wird der Schritt S208 ausgeführt, in dem in gleicher Weise wie in Schritt S103 von Figur 2 abgefragt wird ob ein Schubbetrieb vorliegt und vorzugsweise ein weiteres mal verifiziert wird, ob das Streckenhöhenprofil für die Durchführung des Luftaufbereitungsbetriebs geeignet ist. Ist dies nicht der Fall, so endet das Verfahren und beginnt gegebenenfalls von vorne. Wird in Schritt S208 bestimmt, dass der Schubbetrieb des Fahrzeugs und entsprechende Eignung des Streckenhöhenprofils vorliegen, so schreitet das Verfahren zu Schritt S209 voran. Dort wird eine voraussichtliche Dauer des Schubbetriebs anhand der aktuellen Fahrzeugparameter ermittelt. Insbesondere wird die Dauer des Schubbetriebs zumindest aus der Fahrzeuggeschwindigkeit ermittelt. Als nächstes wird der Schritt S210 ausgeführt, in dem abgefragt wird, ob die Dauer ausreichend für das Ausführen des Luftaufbereitungsbetriebs ist. Insbesondere wird die berechnete voraussichtliche Dauer mit einem vorbestimmten Grenzwert verglichen, der eine Mindestdauer des Schubbetriebs angibt und beliebig festlegbar ist. Ist die voraussichtliche Dauer nicht ausreichend, so endet das Verfahren und beginnt gegebenenfalls von vorne. Ist die Dauer ausreichend, so wird in Schritt S211 der Luftaufbereitungsbetrieb ausgeführt und anschließend der aktuelle Standort des Fahrzeugs ermittelt. Alternativ oder zusätzlich kann bei Schritt S210 ebenso der Abstand zu einem vorausfahrenden Fahrzeug überprüft werden und analog zu der Beurteilung der voraussichtlichen Dauer des Schubbetrieb anhand der Abstanddaten beurteilt werden, ob eine Luftaufbereitung durchgeführt werden soll. Anschließend wird in Schritt S212 abgefragt, ob das Ende der Gesamtstrecke, das heißt das Fahrtziel, erreicht wurde. Ist dies nicht der Fall, so kehrt das Verfahren zu dem Schritt S206 zurück und verbleibt in der Abfrageschleife S206 und S205, bis der nächste vorausberechnete Abschnitt erreicht wird, bei dem ein Schubbetrieb möglich wäre. Wird bei Schritt S212 festgestellt, dass das Ende der Gesamtstrecke erreicht wurde, so endet das Verfahren und beginnt gegebenenfalls erneut von vorne.

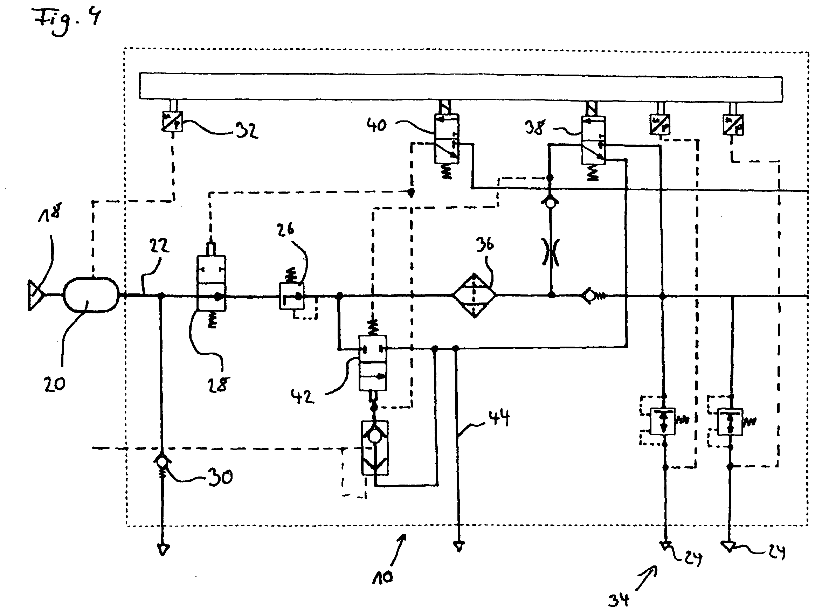

Figur 4 zeigt ein erfindungsgemäßes System mit einer ausführlicheren Darstellung der Luftaufbereitungsanlage 10 gemäß einem ersten Ausführungsbeispiel der Erfindung. Das System umfasst in diesem Fall die Luftaufbereitungsanlage 10 (EAC) eines Nutzfahrzeugs, der über eine Hauptleitung 22 ein Druckluftspeicher 20 vorgeschaltet ist. Dabei führt die Hauptleitung 22 über die Luftaufbereitungsanlage 10 zu einem oder mehreren Druckluftverbrauchern 24, die an entsprechende Druckluftanschlüsse der Luftaufbereitungsanlage 10 angeschlossen sind. Insbesondere können die an die Druckluftanschlüsse der Luftaufbereitungsanlage 10 angeschlossenen Druckluftverbraucher 24 jeweils ihnen zugeordnete Druckluftverbrauchspeicher, beispielsweise Bremsdruckluftspeicher, umfassen. Zur Befüllung des Druckluftspeichers 20 ist diesem ein Kompressor 18 vorgeschaltet. Die Luftaufbereitungsanlage 10 umfasst in diesem Ausführungsbeispiel ein dem Druckluftspeicher 20 nachgeschaltetes und in der Hauptleitung 22 angeordnetes Druckbegrenzungsventil 26. Weiterhin umfasst die Luftaufbereitungsanlage 10 ein dem Druckbegrenzungsventil 26 unmittelbar vorgeschaltetes Sperrventil 28. Im dargestellten Fall bildet das Sperrventil 28 ein 2/2-Wegeventil, das zur Unterbrechung eines Druckluftstromes zu den Druckluftverbrauchern 24 dient. Darüber hinaus zweigt von der Hauptleitung 22 in der Luftaufbereitungsanlage 10 zwischen dem Druckluftspeicher 20 und dem Sperrventil 28 eine Entlüftungsleitung ab, in der ein Sicherheitsventil 30 angeordnet ist. Das Sicherheitsventil 30 ist im gezeigten Fall ein federvorgespanntes Rückschlagventil, das in Richtung zum Druckluftspeicher 20 durch eine Feder vorgespannt wird und schließt. In umgekehrter Richtung unter Überwindung der Vorspannung der Feder lässt sich das Rückschlagventil öffnen. Zur Überwachung eines in dem Druckluftspeicher 20 herrschenden Drucks ist ein Drucksensor 32 in der Luftaufbereitungsanlage 10 vorgesehen, der zum einen mit dem Druckluftspeicher 20 und zum anderen mit einer nicht näher interessierenden Steuereinrichtung (ECU) der Luftaufbereitungsanlage 10 gekoppelt ist. Darüber hinaus umfasst die Luftaufbereitungsanlage 10 eine dem Druckbegrenzungsventil 26 nachgeschaltete Lufttrockner- und Luftfiltereinheit 36, die zur Drucklufttrocknung und Druckluftfilterung der von dem Kompressor 18 und/oder dem Druckluftspeicher 20 geförderten Druckluft dient. Um einen Regenerationsbetrieb der Lufttrockner- und Luftfiltereinheit 36 bewerkstelligen zu können, sind ein erstes und zweites 2/2-Wegeventil 38, 40 sowie ein Ablassventil 42 vorgesehen. Durch entsprechende Ansteuerung des Ablassventils 42 über das zweite 2/2-Wegeventil 40 und Umschaltung des ersten 2/2-Wegeventils 38 sind die Druckluftverbraucher 26 über die Lufttrockner- und Luftfiltereinheit 36 und das Ablassventil 42 mit einem Ablass 44 verbindbar. Weiterhin ist von dem zweiten 2/2-Wegeventil 40 insbesondere im Falle des Regenerationsbetriebs über ein Wechselventil eine ESS-Leitung (Kompressorsteuerausgang) zur Abschaltung des Kompressors 18 ansteuerbar. Darüber hinaus umfasst die Luftaufbereitungsanlage 10 weitere dem Stand der Technik bekannte Komponenten, wie beispielsweise die vorgenannte Steuereinrichtung zur Steuerung des Luftaufbereitungsbetriebs, Druckregelungsventile zur Regulierung der Drücke in unterschiedlichen Druckkreisen der Druckluftverbraucher 24, den einzelnen Druckkreisen zugeordnete Überströmventile zur Kreissicherung, etc.

Im Betrieb wird der Druckluftspeicher 20 durch die Druckluftförderung des Kompressors 18 befüllt. Bei diesem Befüllungsvorgang ist das Sperrventil 28 geöffnet. Vorzugsweise findet der Befüllungsvorgang des Kompressors 18 bei dem Schubbetrieb des Fahrzeugs statt, wie vorstehend beschrieben ist. Der Druckluftspeicher 20 wird dabei auf ein Druckniveau aufgefüllt, das über einem Arbeitsdruck des Bremssystems liegt. Das Druckbegrenzungsventil 26 setzt dabei den Druck der Druckluft auf den für den Betrieb der Luftaufbereitungsanlage 10 erforderlichen Druck herab. Das Sperrventil 28 wird betätigt, wenn das Fahrzeug abgestellt und der Motor ausgeschaltet wird. Es sichert den Druck in dem Druckluftspeicher 20 während der Stillstandszeit des Motors des Fahrzeugs. Der Druckluftspeicher 20 ist vorzugsweise so anzuordnen, dass eventuell anfallendes Kondenswasser aus dem Druckluftspeicher 20 in Richtung der Luftaufbereitungsanlage 10 abfließen kann. Das Kondenswasser kann dann über das Ablassventil 42 ausgestoßen werden.

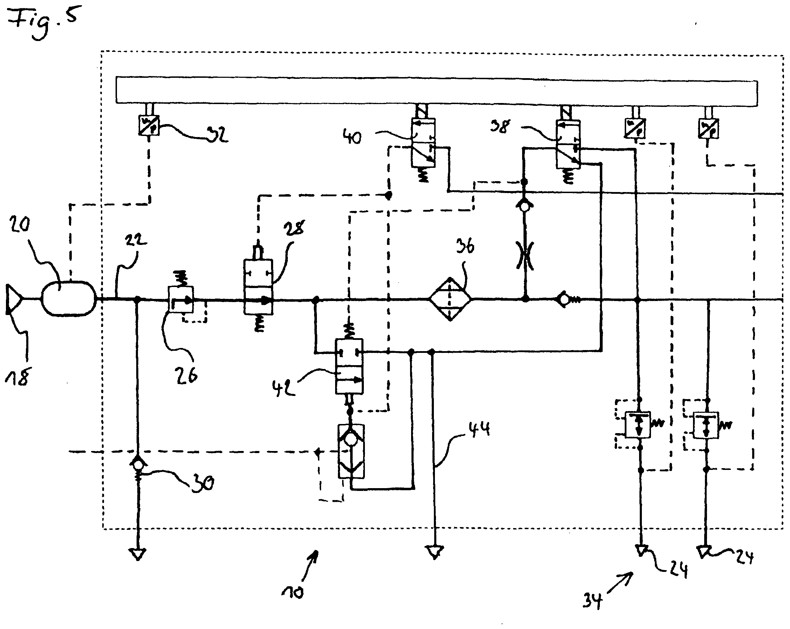

Figur 5 zeigt ein zweites Ausführungsbeispiel des erfindungsgemäßen Systems. Um Wiederholungen zu vermeiden, wird bei der Beschreibung dieses und der folgenden Ausführungsbeispiele nur auf die Unterschiede eingegangen. Das Ausführungsbeispiel von Figur 5 unterscheidet sich unter anderem von dem von Figur 4 darin, dass dem Druckluftspeicher 20 das Druckbegrenzungsventil 26 unmittelbar nachgeschaltet ist. Weiterhin ist dem Druckbegrenzungsventil 26 das Sperrventil 28 unmittelbar nachgeschaltet.

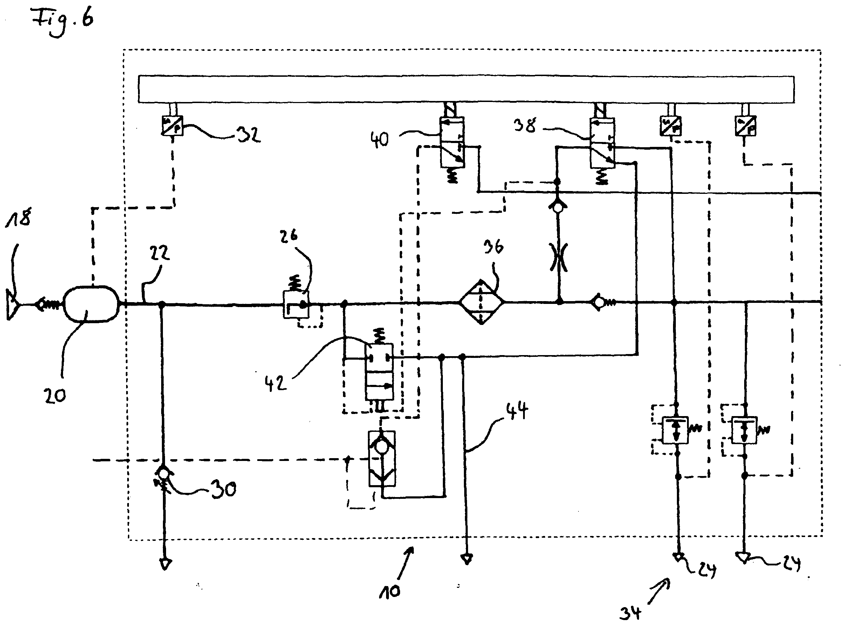

Figur 6 zeigt ein drittes Ausführungsbeispiel des erfindungsgemäßen Systems. Dieses Ausführungsbeispiel unterscheidet sich von dem ersten und zweiten Ausführungsbeispiel darin, dass das Sperrventil 28 weggelassen ist. Darüber hinaus ist dem Druckluftspeicher 20 ein Rückschlagventil vorgeschaltet, das in Richtung zum Kompressor 18 schließt und in Richtung zum Druckluftspeicher 20 öffnet. Weiterhin sind in diesem Ausführungsbeispiel das erste 2/2-Wegeventil 38 zur Ansteuerung des Ablassventils 42 und das zweite 2/2-Wegeventil 40 zur Ansteuerung der ESS-Leitung zur Kompressorabschaltung über das Wechselventil vorgesehen.

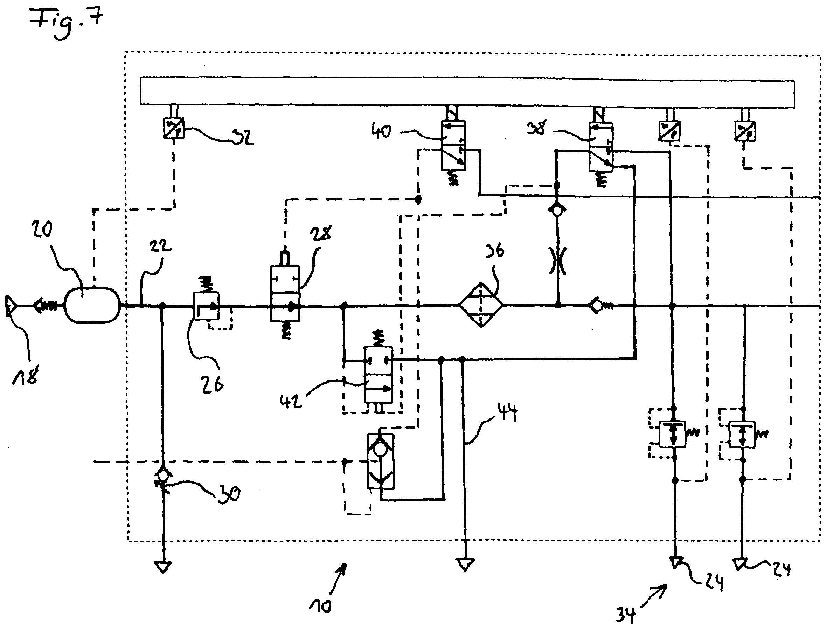

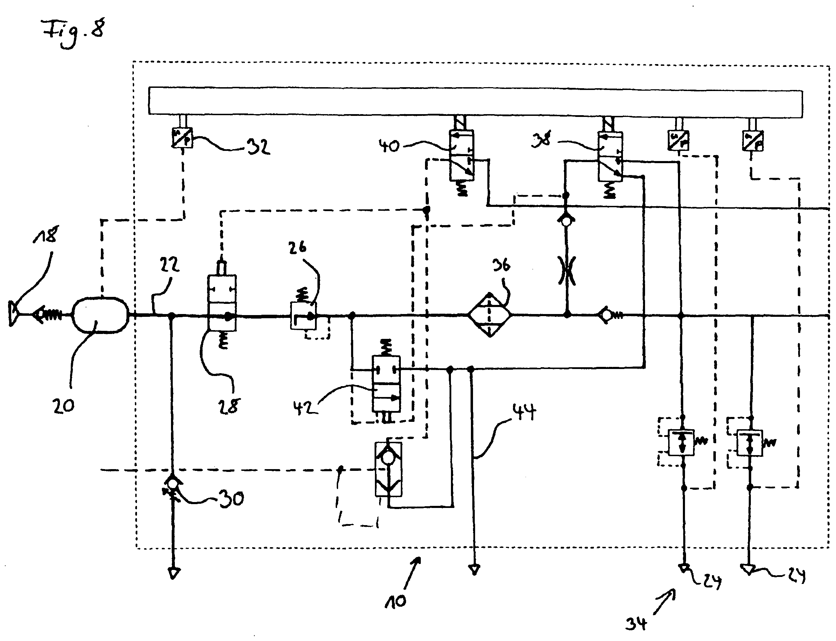

Figuren 7 und 8 zeigen ein viertes und fünftes Ausführungsbeispiel des erfindungsgemäßen Systems. Analog zu den Figuren 4 und 5 sind in den Figuren 7 und 8 jeweils das Druckbegrenzungsventil 26 und das Sperrventil 28 in der Hauptleitung zwischen dem Druckluftspeicher 20 und der Lufttrockner- und Luftfiltereinheit 36 vorgesehen. Im Falle von Figur 7 ist das Druckbegrenzungsventil 26 dem Druckluftspeicher 20 nachgeschaltet, während das Sperrventil 28 dem Druckbegrenzungsventil 26 nachgeschaltet ist. In Figur 8 sind das Sperrventil 28 und das Druckbegrenzungsventil 26 in umgekehrter Reihenfolge angeordnet. Ansonsten gleichen das vierte und fünfte Ausführungsbeispiel dem dritten Ausführungsbeispiel.

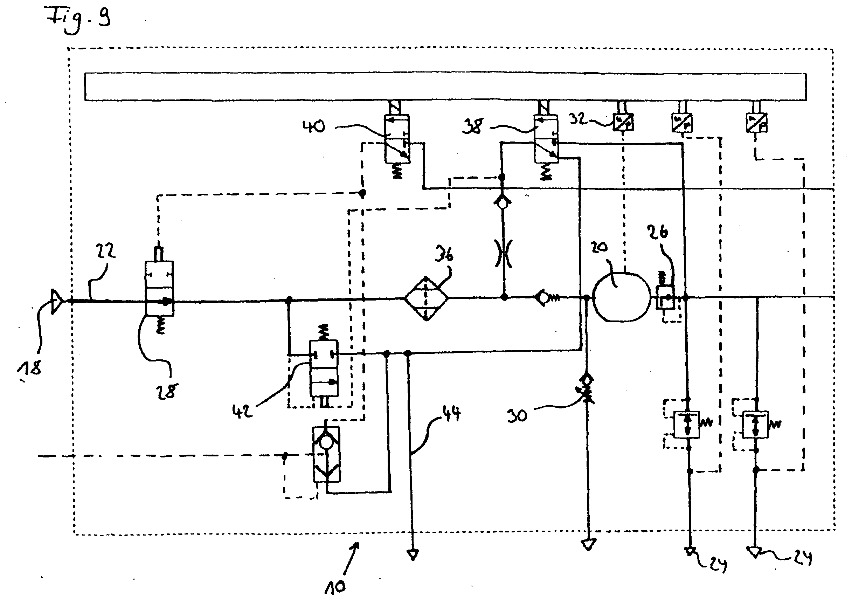

Figur 9 zeigt ein sechstes Ausführungsbeispiel des erfindungsgemäßen Systems. Im dargestellten Fall ist der Druckluftspeicher 20 stromabwärts der Lufttrockner- und Luftfiltereinheit 36 angeordnet. Darüber hinaus ist das Druckbegrenzungsventil 26 unmittelbar stromabwärts des Druckluftspeichers 20 in der Hauptleitung 22 vorgesehen, und zwar bevor Abzweigungen zu den Druckluftverbrauchern 24 von der Hauptleitung 22 abgehen. Ferner ist das Sicherheitsventil 30 in der Entlüftungsleitung dem Druckluftspeicher 20 unmittelbar vorgeschaltet und der Lufttrockner- und Luftfiltereinheit 36 nachgeschaltet, wobei der Entlüftungsleitung mit dem Sicherheitventil 30 ein in Richtung der Lufttrockner- und Luftfiltereinheit 36 schließendes Rückschlagventil vorgeschaltet ist. Vorzugsweise handelt es sich bei dem Druckluftspeicher 20 in diesem Ausführungsbeispiel um ein internes Volumen in der Luftaufbereitungseinheit beziehungsweise Luftaufbereitungsanlage 10. Ansonsten entspricht dieses Ausführungsbeispiel dem in Figur 7 oder 8 gezeigtem Ausführungsbeispiel.

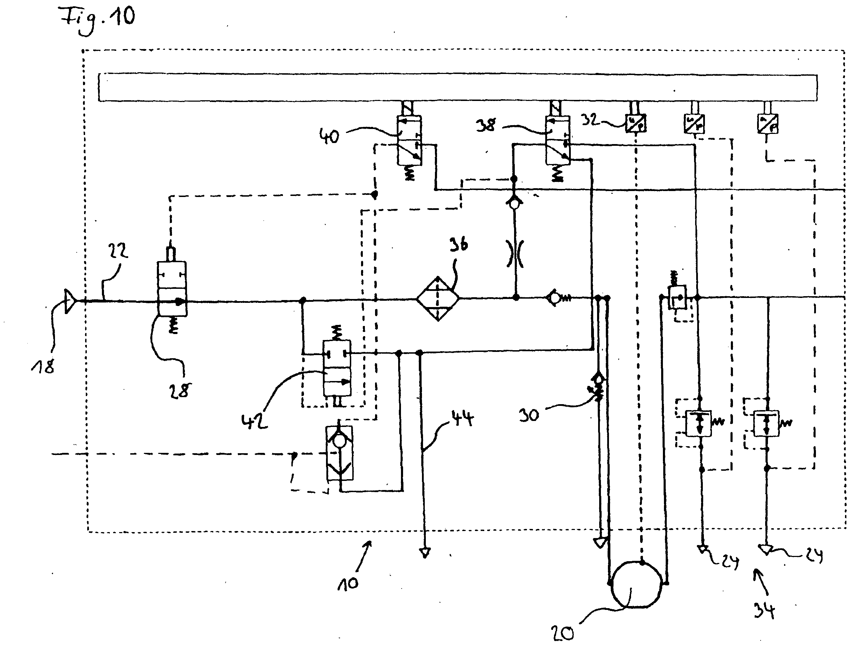

Figur 10 zeigt ein siebtes Ausführungsbeispiel des erfindungsgemäßen Systems. Das erfindungsgemäße System des siebten Ausführungsbeispiels unterscheidet sich von dem von Figur 9 darin, dass der Druckluftbehälter 20 aus der Luftaufbereitungsanlage 10 ausgelagert ist, also einen externen Druckluftspeicher 20 bildet. Weiterhin ist in diesem Ausführungsbeispiel vorgesehen, dass die Druckluftverbraucher 24, insbesondere des Bremssystems 34 über das erste 2/2-Wegeventil 38 zur Regenerationssteuerung (Regenerationsventil) mit der Lufttrockner- und Luftfiltereinheit 36 verbindbar sind. So ist es insbesondere möglich, nach Erreichen bestimmter Fördermengen beziehungsweise nach dem Ablauf bestimmter Zeiträume, die Lufttrockner- und Luftfiltereinheit 36 über die Regenerationsluft des Bremssystems 34 zu reinigen. Diese Regenerationsluft wird nach durchlaufen der Lufttrockner- und Luftfiltereinheit 36, die dann mit Feuchtigkeit und Fremdpartikeln aus der Filtereinheit beladen ist, über das Ablassventil 42 und den Ablass 44 in die Atmosphäre abgelassen.

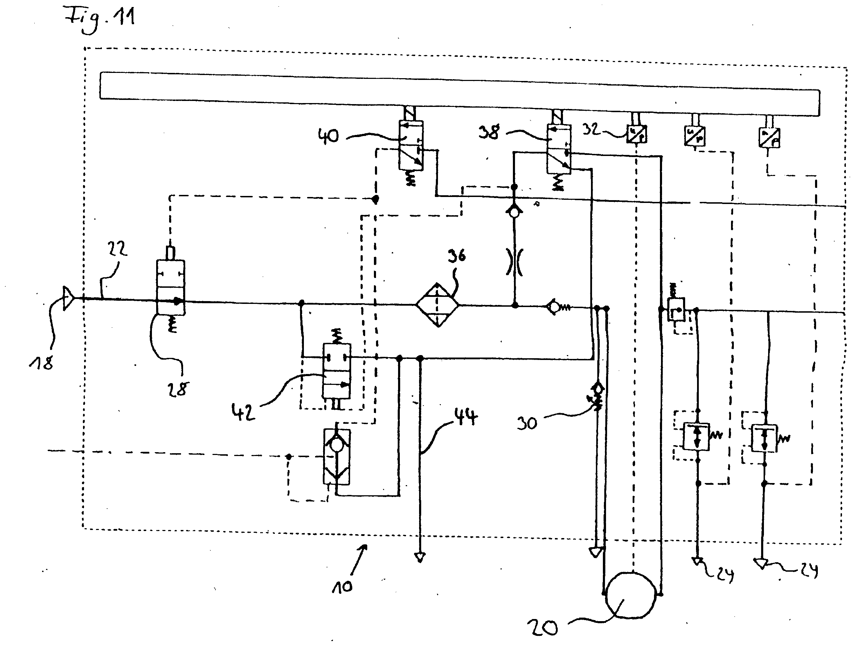

Figur 11 zeigt ein achtes Ausführungsbeispiel des erfindungsgemäßen Systems. Dieses Ausführungsbeispiel unterscheidet sich von dem siebten Ausführungsbeispiel darin, dass in diesem Fall der Druckluftspeicher 20 mit dem ersten Magnetventil 38 zur Regenerationssteuerung gekoppelt ist, wodurch die Regenerationsluft für die Lufttrockner- und Luftfiltereinheit 36 von dem Druckluftspeicher 20 zuführbar ist.

### Bezugszeichenliste:

- 10: Luftaufbereitungsanlage
- 12: Navigationssystem
- 14: Steuereinrichtung
- 16: Antriebsstrang
- 18: Kompressor
- 20: Druckluftspeicher
- 22: Hauptleitung
- 24: Druckluftverbraucher
- 26: Druckbegrenzungsventil
- 28: Sperrventil
- 30: Sicherheitsventil
- 32: Drucksensor
- 34: Bremssystem
- 36: Lufttrockner- und Luftfiltereinheit
- 38: erstes 2/2-Wegeventil
- 40: zweites 2/2-Wegeventil
- 42: Ablassventil
- 44: Ablass

## Patentansprüche

1. System mit einer Luftaufbereitungsanlage (10), insbesondere der eines Nutzfahrzeugs, wobei stromaufwärts von zumindest einem zu einem Druckluftverbraucher (24) führenden Druckluftanschluss der Luftaufbereitungsanlage (10) ein Druckluftspeicher (20) vorgesehen ist, **dadurch gekennzeichnet, dass** der Druckluftspeicher (20) einer Lufttrocknereinheit (36) der Luftaufbereitungsanlage (10) vorgeschaltet ist.

2. System nach Anspruch 1 , **dadurch gekennzeichnet, dass** dem Druckluftspeicher (20) ein der Luftaufbereitungsanlage (10) zugeordnetes Druckbegrenzungsventil (26) nachgeschaltet ist.

3. System nach Anspruch 2, **dadurch gekennzeichnet, dass** dem Druckbegrenzungsventil (26) ein der Luftaufbereitungsanlage (10) zugeordnetes Sperrventil (28) unmittelbar vor- oder nachgeschaltet ist.

4. System nach einem Ansprüche 1 bis 3, **dadurch gekennzeichnet, dass** der Druckluftspeicher (20) der Luftaufbereitungsanlage (10) vorgeschaltet ist.

5. System nach einem der Ansprüche 1 bis 4, **dadurch gekennzeichnet, dass** ein der Luftaufbereitungsanlage (10) zugeordnetes Sicherheitsventil (30) dem Druckluftspeicher (20) vor- oder nachgeschaltet und dem Druckluftbegrenzungsveritil (26) sowie dem Sperrventil (28) vorgeschaltet ist.

6. System nach Anspruch 5, **dadurch gekennzeichnet, dass** das Sicherheitsventil (30) ein federvorgespanntes Rückschlagventil (30) umfasst, das in Richtung zum Druckluftspeicher (20) vorgespannt wird und schließt, und das in umgekehrter Richtung unter Überwindung der Vorspannung öffnet.

7. System nach einem der Ansprüche 1 bis 6, **dadurch gekennzeichnet, dass** der Druckluftspeicher (20) mit einer Hauptleitung (22) gekoppelt ist, die über die Luftaufbereitungsanlage (10) zu einem oder mehreren Druckluftverbrauchern (24) führt.

8. System nach einem der Ansprüche 1 bis 7, **dadurch gekennzeichnet, dass** dem Druckluftspeicher (20) eine Druckmittelquelle (18), insbesondere ein Kompressor (18), vorgeschaltet ist.

9. System nach einem der Ansprüche 1 bis 8, **dadurch gekennzeichnet, dass** ein der Luftaufbereitungsanlage (10) zugeordneter Drucksensor (32) vorgesehen ist, der den Druck in dem Druckluftspeicher (20) erfasst.

10. System nach einem der Ansprüche 1 bis 9, **dadurch gekennzeichnet, dass** der Druckluftspeicher (20) dazu geeignet ist, in einem Schubbetrieb des Nutzfahrzeugs auf ein Druckniveau aufgefüllt zu werden, das über einem Arbeitsdruck eines Bremssystems (34) liegt.

11. System nach einem der Ansprüche 1 bis 10, **dadurch gekennzeichnet, dass** die Luftaufbereitungsanlage (10) und der Druckluftspeicher (20) in einem gemeinsamen Gehäuse untergebracht sind.

12. Verfahren zur Steuerung einer Luftaufbereitungsanlage (10) eines Fahrzeugs, insbesondere der eines Nutzfahrzeugs, **dadurch gekennzeichnet, dass** stromaufwärts von zumindest einem zu einem Druckluftverbraucher (24) führenden Druckluftanschluss der Luftaufbereitungsanlage (10) ein Druckluftspeicher (20) vorgesehen ist, der auf ein Druckluftniveau aufgefüllt wird, das über einem Arbeitsdruck eines Bremssystems (34) liegt, wobei der Druckluftspeicher (20) einer Lufttrocknereinheit (36) der Luftaufbereitungsanlage (10) vorgeschaltet ist.

13. Verfahren nach Anspruch 12, **dadurch gekennzeichnet, dass** der Druckluftspeicher (20) bei einem Schubbetrieb des Fahrzeugs aufgefüllt wird.

14. Verfahren nach Anspruch 12 oder 13, **dadurch gekennzeichnet, dass** ein Kompressor (18) angetrieben wird, um Druckluft zu dem Bremssystem (34) nachzufördern, wenn das Druckluftniveau in dem Druckluftspeicher (20) auf oder unter den Arbeitsdruck des Bremssystems (34) gefallen ist.

15. Verfahren nach einem der Ansprüche 12 bis 14, **dadurch gekennzeichnet, dass** ein dem Druckluftspeicher (20) nachgeschaltetes Sperrventil (28) in eine Schließstellung gebracht wird, wenn das Fahrzeug abgestellt wird.

## Claims

1. System with an air conditioning unit (10), in particular that of a commercial vehicle, wherein upstream from at least one compressed air connection of the air conditioning unit (10) that leads to a compressed air consumer (24) a compressed air reservoir (20) is provided, **characterised in that** the compressed air reservoir (20) is connected upstream from an air dryer unit (36) of the air conditioning unit (10).

2. System according to Claim 1, **characterised in that** downstream from the compressed air reservoir (20) there is connected a pressure-limiting valve (26) associated with the air conditioning unit (10).

3. System according to Claim 2, **characterised in that** a check valve (28) associated with the air conditioning unit (10) is connected immediately upstream or downstream from the pressure-limiting valve (26).

4. System according to any of Claims 1 to 3, **characterised in that** the compressed air reservoir (20) is connected upstream from the air conditioning unit (10).

5. System according to any of Claims 1 to 4, **characterised in that** a safety valve (30) associated with the air conditioning unit (10) is connected upstream or downstream from the compressed air reservoir (20) and from the compressed air limiting valve (26) and the check valve (28).

6. System according to Claim 5, **characterised in that** the safety valve (30) comprises a spring-loaded non-return valve (30), which is pre-stressed and closes in the direction toward the compressed air reservoir (20), and which opens in the reverse direction when the pre-stress is overcome.

7. System according to any of Claims 1 to 6, **characterised in that** the compressed air reservoir (20) is connected to a main line (22), which leads via the air conditioning unit (10) to one or more compressed air consumers (24).

8. System according to any of Claims 1 to 7, **characterised in that** connected upstream from the compressed air reservoir (20) there is a pressure medium source (18), in particular a compressor (18).

9. System according to any of Claims 1 to 8, **characterised in that** a pressure sensor (32) associated with the air conditioning unit (10) is provided, which detects the pressure in the compressed air reservoir (20).

10. System according to any of Claims 1 to 9, **characterised in that** the compressed air reservoir (20) is suitable for being filled during overdrive operation of the commercial vehicle, up to a pressure level higher than a working pressure of a brake system (34).

11. System according to any of Claims 1 to 10, **characterised in that** the air conditioning unit (10) and the compressed air reservoir (20) are accommodated in a common housing.

12. Method for controlling an air conditioning unit (10) of a vehicle, in particular that of a commercial vehicle, **characterised in that** upstream from at least one compressed air connection of the air conditioning unit (10) that leads to a compressed air consumer (24), a compressed air reservoir (20) is provided, which is filled to a compressed air level higher than a working pressure of a brake system (34), and the compressed air reservoir (20) is connected upstream from an air dryer unit (36) of the air conditioning unit (10).

13. Method according to Claim 12, **characterised in that** the compressed air reservoir (20) is filled during overdrive operation of the vehicle.

14. Method according to Claims 12 or 13, **characterised in that** a compressor (18) is driven in order to top up the brake system (34) with compressed air if the pressure level in the compressed air reservoir (20) has fallen to the working pressure of the braking system (34) or below it.

15. Method according to any of Claims 12 to 14, **characterised in that** a check valve (28) connected downstream from the compressed air reservoir (20) is brought to a closed position when the vehicle is parked.

## Revendications

1. Système comprenant une installation (10) de traitement de l'air, notamment celle d'un véhicule utilitaire, dans lequel, en amont d'au moins un raccord pour de l'air comprimé conduisant à un consommateur (24) d'air comprimé de l'installation (10) de traitement de l'air, est prévu un accumulateur (20) d'air comprimé, **caractérisé en ce que** l'accumulateur (20) d'air comprimé est monté en amont d'une unité (36) de séchage de l'air de l'installation (10) de traitement de l'air.

2. Système suivant la revendication 1, **caractérisé en ce que** l'accumulateur (20) d'air comprimé est monté en aval d'une soupape (28) de limitation de la pression associée à l'installation (10) de traitement de l'air.

3. Système suivant la revendication 2, **caractérisé en ce qu'**un robinet (28) d'arrêt, associé à l'installation (10) de traitement de l'air, est monté immédiatement en amont ou en aval de la soupape (26) de limitation de la pression.

4. Système suivant l'une des revendications 1 à 3, **caractérisé en ce que** l'accumulateur (20) d'air comprimé est monté en amont de l'installation (10) de traitement de l'air.

5. Système suivant l'une des revendications 1 à 4, **caractérisé en ce qu'**une soupape (30) de sécurité, associée à l'installation (10) de traitement de l'air, est montée en amont ou en aval de l'accumulateur (20) d'air comprimé et est montée en amont de la soupape (26) de limitation de la pression ainsi que du robinet (28) d'arrêt.

6. Système suivant la revendication 5, **caractérisé en ce que** la soupape (30) de sécurité comprend un clapet (30) antiretour, qui est précontraint par un ressort et se ferme dans la direction allant vers l'accumulateur (20) d'air comprimé et qui s'ouvre dans le sens contraire en surmontant la précontrainte.

7. Système suivant l'une des revendications 1 à 6, **caractérisé en ce que** l'accumulateur (20) d'air comprimé est couplé à un conduit (22) principal, qui mène, en passant par l'installation (10) de traitement de l'air, à un ou à plusieurs consommateurs (24) d'air comprimé.

8. Système suivant l'une des revendications 1 à 7, **caractérisé en ce qu'**une source (18) de fluide sous pression, notamment un compresseur (18), est montée en amont de l'accumulateur (20) d'air comprimé.

9. Système suivant l'une des revendications 1 à 8, **caractérisé en ce qu'**il est prévu un capteur (32) de pression, qui est associé à l'installation (10) de traitement de l'air et qui relève la pression dans l'accumulateur (20) d'air comprimé.

10. Système suivant l'une des revendications 1 à 9, **caractérisé en ce que** l'accumulateur (20) d'air comprimé est propre, dans un roulement sur sa lancée du véhicule utilitaire, à être rempli à un niveau de pression, qui est supérieur à une pression de travail d'un système (34) de frein.

11. Système suivant l'une des revendications 1 à 10, **caractérisé en ce que** l'installation (10) de traitement de l'air et l'accumulateur (20) d'air comprimé sont logés dans une enveloppe commune.

12. Procédé de commande d'une installation (10) de traitement de l'air d'un véhicule, notamment de celle d'un véhicule utilitaire, **caractérisé en ce qu'**en amont d'au moins un raccord pour de l'air comprimé conduisant à un consommateur (24) d'air comprimé de l'installation (10) de traitement de l'air, est prévu un accumulateur (20) d'air comprimé, qui est rempli jusqu'à un niveau d'air comprimé, qui est supérieur à une pression de travail d'un système (34) de frein, l'accumulateur (20) d'air comprimé étant monté en amont d'une unité (36) de sécheur d'air de l'installation (10) de traitement de l'air.

13. Procédé suivant la revendication 12, **caractérisé en ce que** l'accumulateur (20) d'air comprimé se rempli lors d'un roulement sur sa lancée du véhicule.

14. Procédé suivant la revendication 12 ou 13, **caractérisé en ce que** l'on entraîne un compresseur (18) pour véhiculer de l'air comprimé au système (34) de frein si le niveau de l'air comprimé dans l'accumulateur (20) d'air comprimé s'est abaissé à ou en dessous de la pression de travail du système (34) de frein.

15. Procédé suivant l'une des revendications 12 à 14, **caractérisé en ce que** l'on met un robinet (28) d'arrêt, monté en aval de l'accumulateur (20) d'air comprimé, en une position de fermeture si l'on arrête le véhicule.
